(19) Europäisches Patentamt / European Patent Office / Office européen des brevets

(11) **EP 4 436 760 B1**

(12) **EUROPEAN PATENT SPECIFICATION**

(45) Date of publication and mention
of the grant of the patent:
**24.09.2025 Bulletin 2025/39**

(21) Application number: **22822431.7**

(22) Date of filing: **25.11.2022**

(51) International Patent Classification (IPC):
**B27N 3/00** *(2006.01)*    **B32B 21/00** *(2006.01)*
**C08G 12/42** *(2006.01)*    **C09J 161/30** *(2006.01)*
**C08G 12/38** *(2006.01)*    **B27N 3/02** *(2006.01)*
**B27N 3/04** *(2006.01)*    **B27N 3/18** *(2006.01)*

(52) Cooperative Patent Classification (CPC):
(C-Sets available)
**C08G 12/38; B27N 3/002; B27N 3/18;
C09J 161/30;** B27N 3/02; B27N 3/04    (Cont.)

(86) International application number:
**PCT/EP2022/083303**

(87) International publication number:
**WO 2023/094603 (01.06.2023 Gazette 2023/22)**

(54) **METHOD FOR THE PRODUCTION OF MELAMINE-UREA-FORMALDEHYDE RESINS, THE RESINS OBTAINED THEREWITH, AND APPLICATIONS OF SAID RESINS**

VERFAHREN ZUR HERSTELLUNG VON MELAMIN-HARNSTOFF-FORMALDEHYD-HARZEN, DAMIT ERHALTENE HARZE UND ANWENDUNGEN DIESER HARZE

PROCÉDÉ DE PRODUCTION DE RÉSINES MÉLAMINE-URÉE-FORMALDÉHYDE, RÉSINES AINSI OBTENUES ET APPLICATIONS DESDITES RÉSINES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.11.2021 EP 21383067**

(43) Date of publication of application:
**02.10.2024 Bulletin 2024/40**

(73) Proprietor: **FORESA TECHNOLOGIES, S.L.U.
36650 Pontevedra (ES)**

(72) Inventor: **OTERO VÁZQUEZ, Luis Alberto
36650 Caldas de Reis (ES)**

(74) Representative: **Balder IP Law, S.L.
Paseo de la Castellana 93
5ª planta
28046 Madrid (ES)**

(56) References cited:
**CN-A- 108 795 352    JP-A- 2000 143 751
US-A- 4 536 245**

(52) Cooperative Patent Classification (CPC): (Cont.)

C-Sets
**C09J 161/30, C08L 97/02**

**Description**

**Field of the Invention**

The present invention relates to a method for producing melamine-urea-formaldehyde resins, to the resins obtained therewith, as well as applications of said resins. Formaldehyde based resins, such as urea-formaldehyde or melamine-urea-formaldehyde resins, are widely used as adhesives in the production for example of fibreboards, particleboards and plywood, as well as in various types of insulations, such as fibreglass and rock wool insulations.

**Background of the Invention**

Melamine-Urea-Formaldehyde (MUF) resins were developed on the basis of melamine-formaldehyde (MF) resins, which were and are widely used in the manufacture of moulding compositions, laminating, adhesives, surface coating and other industrial applications. MF has a high resistance to water attack in comparison with widely used urea-formaldehyde (UF) resin, but MF is more expensive than UF resin. Therefore, melamine-urea-formaldehyde resins are now produced, which have unique characteristics and properties, in many ways different to those of MF or UF resins. Various MUF resin formulations have different properties, performance and durability, the most important being shelf life, solubility in water and curing period, which may be formulation according to their intended applications.

In the manufacture processes of MUF resins, several factors are involved, among which are the reaction period for each reaction step, the efficiency of controlling the pH and the temperature throughout the process, the mole ratio of formaldehyde to urea/melamine, and the number of steps in which amino compounds are reacted, i.e., the condensation steps. The combination and variation of these factors produce different resin shelf life, degrees of solubility in water and curing periods (Sandler et al., 1994, "Polymer synthesis", Vol II. 2nd Ed., USA: Academic Press Inc.). However, balancing all of these factors to obtain satisfactory properties for specific applications is complicated, due to the interactions among the above-mentioned implied factors. For example, improving resin solubility may increase the curing period (*Vaughn et al., 2000, "Waterborne Melamine formaldehyde crosslinker for low temperature baked coatings", International Waterborne, High solid, and powder coating Symposium*), or shortening the resin-curing period, may produce an unstable resin (Patent publication US571039A).

Also the relative amounts of melamine or urea affect the final properties of the MUF resins, as resins having too low amounts of melamine, generally lack or have less chemical, scratch and stain resistant properties. Urea is used mainly to reduce the free formaldehyde emission of the MUF resin, although a relatively high amount is desirable for the resin to be economical.

For example, a process for manufacturing a MUF resin with sufficient amount of melamine to display a high resistance has been disclosed in Bono et al. (June 2003, "Melamine-Urea-Formaldehyde (MUF) Resin: The Effect of the Number of Reaction Stages and Mole Ratio on Resin Properties", Jurnal Teknologi, pages 43 to 52). Said process comprises the simultaneous addition of urea and melamine to formaldehyde; in a first stage, an addition process between formaldehyde and urea takes place; in a second stage, propagation of polymer chain takes place, whereby formation of methylene and etherification process occurs; in a third stage, additional melamine or urea or formaldehyde is added, according to the modification of the resin properties desired.

US5008365A discloses a process for the manufacture of urea-formaldehyde resins containing not more than 10% of melamine and exhibiting a final molar ratio formaldehyde/$NH_2$ groups of between 0.5 and 0.575, wherein a part of the urea and the formaldehyde are condensed at an acidic pH in a first stage, then melamine is added at a basic pH, the remaining urea being added in a third stage at a basic pH; the melamine is added in the first stage of condensation of urea and a source of formaldehyde.

EP2402379A1 discloses a process for producing urea-melamine-formaldehyde resin, by stagewise condensation of urea with formaldehyde, which is followed with co-condensation of the produced prepolymeric urea - formaldehyde co-condensate with melamine.

US2014/0275353A1 discloses amino-formaldehyde resins, which preparation requires, besides at least one amino compound, selected from urea and/or melamine, a monohydroxy cyclic compound.

US2003/0004298A1 discloses a process for preparing a melamine-urea-formaldehyde resin with alleged long-term stability. The process comprises mixing formaldehyde and urea to form a UF mixture, reacting formaldehyde and urea in several steps, and finally adding melamine to form a MUF mixture and subsequently letting react.

WO2013144226A1 discloses a process for producing melamine-urea-formaldehyde resin, particularly with not more than 0.9% of melamine; the process starts with an urea methylolation as first step.

US5681917A also discloses a process for producing melamine-urea-formaldehyde resin which first step is an urea methylolation reaction.

US4536245A discloses melamine-urea-formaldehyde resins and a method for their production, involving a two-step reaction. In the first step, urea and formaldehyde are mixed and part or all of the melamine is added, and the mixture reacted. Then the remaining urea is added, and condensation is caused to occur. The disclosed resin has a final molar ratio of formaldehyde to urea of 1.3:1 to 0.9:1, and a melamine content of from 0.15% to 40%. That is, the method starts with a methylolation step with both urea and melamine present, together with formaldehyde.

CN108795352A discloses a method for the production of melamine-urea formaldehyde resins, comprising a first step of mixing formaldehyde, urea and melamine, and making the mixture react. Subsequently, further urea and optionally melamine are added and condensation is caused to occur. That is, the method starts with a methylolation step with both urea and melamine present, together with formaldehyde.

That is, according to the state of the art, the methods for producing melamine-urea-formaldehyde resins so far developed, are variations around a method that necessarily comprises a first reaction of urea with formaldehyde, optionally in the presence of melamine; in this first reaction, methylol compounds are obtained, the step often designated as urea methylation. The second step is a urea condensation reaction of the methylolureas obtained in the first step; as it is carried out at acidic pH values, it is generally designated as acid condensation. In a third step a melamine condensation reaction is carried out, to produce polymers, and then highly branched and cured networks as the reaction continues. Generally, in a final step an addition of final urea is performed.

## Summary of the invention

A new method of producing melamine-urea-formaldehyde resins according to the present invention has now been developed, wherein, against the believe of years, the first step of the method, i.e., the methylolation step, is carried out not with urea, but with melamine. This feature unexpectedly and surprisingly provides several improvements with regard to the processes known in the state of the art. For example, the process according to the present invention surprisingly improves the reactivity of the obtained resins, improves some physicochemical properties such as the Internal Bond (IB), and provides lower free formaldehyde content in the resins. On the other hand, this new method provides resins which exhibit a higher stability during storage, compared with resins obtained by methods according to the state of the art, as is shown in the Examples.

According to a first aspect, the invention relates to a method for the production of melamine-urea-formaldehyde resins, characterized in that it comprises:

a) a melamine methylolation step, comprising:

- loading formaldehyde, and, optionally, water, into a reactor equipped with stirring, cooling and heating; wherein formaldehyde is selected from formaldehyde, paraformaldehyde and MFC (Melamine Formaldehyde Concentrate), or a mixture of two or three of them;

- optionally adding a buffer;

- adjusting the pH between 7.5 and 8.5 by adding an alkali;

- adding melamine, in an amount such that the molar ratio of formaldehyde/melamine is between 108 and 6, preferably between 52 and 8;

- carrying out the methylolation reaction, maintaining the pH between 7.0 and 8.5, at a temperature between 70 and 120 °C, in a range of pressure from 0.05 bar to 2.5 bar, during between 5 and 100 minutes;

b) an urea methylolation step, comprising:

- adjusting the pH between 6.5 and 7.5 by adding an alkali;

- adding urea, in an amount such that the molar ratio of formaldehyde/urea is between 5.2 and 2.0, preferably between 5.2 and 4.8;

- carrying out the methylolation reaction, maintaining the pH between 6.5 and 7.5, at a temperature between 70 and 120 °C, in a range of pressure from 0.05 bar to 2.5 bar, during between 5 and 100 minutes;

c) an urea condensation step, comprising:

- adding urea to the reactor, in an amount such that the molar ratio of formaldehyde/urea in the reactor is between 2.6 and 1.5, preferably between 2.3 and 1.9, adjusting the pH between 6.0 and 7.2;

- heating to 70-120°C, in a range of pressure from 0.05 bar to 2.5 bar, during between 30 and 300 minutes, to carry out the condensation reaction;

- plotting a condensation curve, measuring the viscosity of samples from the reaction mixture, at different time intervals during the condensation reaction, with a viscosimeter at 25°C, until the viscosity corresponding to the aimed molecular weight is reached;

- finalising the condensation by adding an alkali, to obtain a pH between 8.0 and 8.5;

d) a final urea addition step, comprising:

- adding further urea, at a temperature of 70 to 30 °C, during 15 to 120 minutes, maintaining a pH between 9.0 and 9.5, to reach a final molar ratio of formaldehyde/urea between 3.0 and 0.5;

- cooling to a temperature lower than 30 °C.

According to a second aspect, the invention refers to a melamine-urea-formaldehyde resin obtained by the method according to the present invention, as defined above.

A further aspect is the use of the melamine-urea-formaldehyde resin according to the present invention as an adhesive in the manufacture of products selected from wood composite boards, such as wood derived boards and fibreboards, natural and/or synthetic, woven or non-woven fibre mats for compression molding and the resulting composites, particleboards, chip boards, oriented strand boards, plywood and paperboards, and fibreglass insulations and rock wool insulations.

According to a last aspect, the invention is related to products obtained by use of the melamine-urea-formaldehyde resin according to the present invention, wherein the products are selected from wood composite boards, such as wood derived boards and fibreboards, natural and/or synthetic, woven or non-woven fibre mats for compression molding and the resulting composites, particleboards, chip boards, oriented strand boards, plywood and paperboards, and fibreglass insulations and rock wool insulations.

## Brief description of the figures

**Figure 1:** reflects a flow diagram corresponding to the production of particleboard (schematic diagram, based on the following source: "Wood-Based Panels, An Introduction for Specialists" (2010), Brunel University Press, Thoemen et al, Pages 5-47).

**Figure 2:** reflects a flow diagram corresponding to the production of Medium Density Fibreboard (MDF) (schematic diagram, based on the following source: "Wood-Based Panels, An Introduction for Specialists" (2010), Brunel University Press, Thoemen et al, Pages 61-73)

**Figure 3:** Graphic representation of resin stability at 22 °C, plotting the viscosity at 25°C in mPas versus days of storage, for resins obtained according to Examples 1a, 2 and 3

**Figure 4:** Graphic representation of resin stability at 30 °C, plotting the viscosity at 25°C in mPas, versus days of storage, for resins obtained according to Examples 1a, 2 and 3

**Figure 5:** Graphic representation of resin stability at 22 °C, plotting the viscosity at 25°C in mPas versus days of storage, for resins obtained according to Examples 1a, 1b, 1c, 2 and 3

**Figure 6:** Graphic representation of resin stability at 30 °C, plotting the viscosity at 25°C in mPas versus days of storage, for resins obtained according to Examples 1a, 1b, 1c, 2 and 3

## Detailed description of the invention

### Definitions

"Acids" in the frame of the present invention refers to organic and/or inorganic acids. The acid should have a pKa lower than 7; according to a particular embodiment, the pKa will be in the range of 2-5. Examples of such organic acids, but not limited thereto, are formic acid, lactic acid, glycolic acid, acetic acid, sulfamic acid; examples of such inorganic acids, but not limited thereto, are sulphuric acid, hydrochloric acid and phosphoric acid. Any other acids known to those skilled in the art, and complying with the above conditions, are understood to be usable to adjust the pH values in the method of the present invention, although not explicitly included in the above list.

"Alkali" in the frame of the present invention is a base that dissolves in water, which should have a pKa higher than 7; according to a particular embodiment, the pKa will be in the range of 8-15. Such alkalis may be, but are not limited to, hydroxides, amines, carbonates and ammonium. Particular examples thereof, but not limited thereto, are sodium hydroxide, ammonia, monoethanolamine (MEA), diethanolamine (DEA), triethanolamine (TEA), and sodium carbonate. Any other alkalis known to those skilled in the art, and complying with the above conditions, are understood to be usable to adjust the pH values in the method of the present invention, although not explicitly included in the above list.

"Buffer" in the frame of the present invention refers to a buffer solution (also known as pH buffer or hydrogen ion buffer), which achieves that the pH of a solution is changed very little, or not at all, when a small amount of strong acid or base is added to it. Buffer solutions are used to keep pH at a nearly constant value. They generally consist of a chemical substance or combination of chemical substances. Examples thereof are acid salts. Sodium acetate or disodium phosphate are particular examples of buffers useful in the methods of the present invention. Any other buffer substances or solutions known to those skilled in the art are understood to be usable in the method of the present invention, although not explicitly mentioned.

"Reactive matter", in the frame of the present invention, refers to the sum of weight percentages of pure melamine, urea and formaldehyde. That is, "reactive matter" is the sum of weight percentages of pure melamine, pure urea, contained in e.g. the pilled or pearled urea used, and the formaldehyde actually contained in the formaldehyde solution used: formaldehyde amount in water is limited to a certain weight percentage, generally to about 55-56 wt. %, but in order to calculate the "reactive matter", the formaldehyde transformed into 100% is used.

"Formaldehyde", in the frame of the present invention, refers to a formaldehyde solution, paraformaldehyde and/or MF (Melamine Formaldehyde Concentrate), or a mixture of the foregoing; the formaldehyde solution is generally a solution with a concentration of 50 to 55 wt. % ($\pm$ 0.5 wt. %) formaldehyde in water.

## Method

As indicated in the background section of the present patent application, according to the state of the art, the method for producing melamine-urea-formaldehyde resins necessarily comprises a first reaction of urea with formaldehyde, to obtain methylol compounds, known as urea methylation. The second step of known methods is an urea condensation reaction of the methylolureas obtained in the first step, known as acid condensation, as it is carried out at acidic pH values, and a third step is a melamine condensation reaction, which is carried out at slightly basic pH values, to produce polymers and then highly branched and cured networks. The final step is generally the addition of final urea.

Surprisingly, a new method of producing melamine-urea-formaldehyde resins according to the present invention has now been developed, which comprises a first step of melamine methylolation, i.e., the first step is not carried out with urea, but with melamine. As noted above, this feature unexpectedly provides important improvements with regard to processes known in the state of the art. For example, the process on the one hand is simpler to carry out, and on the other hand is more secure: it avoids the need of making pH adjustments at high temperatures, said adjustment supposing a risk of uncontrolled reactions and gelifications; it improves the reactivity of the obtained resins; it improves some physicochemical properties of the obtained resin, such as the Internal Bond (IB); and provides lower free formaldehyde content in the resins. Further, this new method provides resins which exhibit a stability during storage which is higher than that of resins obtained by known methods.

Thus, according to a first aspect, the invention relates to a method for the production of melamine-urea-formaldehyde resins, characterized in that it comprises:

a) a melamine methylolation step, comprising:

- loading formaldehyde, and, optionally, water, into a reactor equipped with stirring, cooling and heating; wherein formaldehyde is selected from formaldehyde, paraformaldehyde and MFC (Melamine Formaldehyde Concentrate), or a mixture of two or three of them;

- optionally adding a buffer;

- adjusting the pH between 7.5 and 8.5 by adding an alkali;

- adding melamine, in an amount such that the molar ratio of formaldehyde/melamine is between 108 and 6, preferably between 52 and 8;

- carrying out the methylolation reaction, maintaining the pH between 7.0 and 8.5, at a temperature between 70 and 120 °C, in a range of pressure from 0.05 bar to 2.5 bar, during between 5 and 100 minutes;

b) an urea methylolation step, comprising:

- adjusting the pH between 6.5 and 7.5 by adding an alkali;

- adding urea, in an amount such that the molar ratio of formaldehyde/urea is between 5.2 and 2.0, preferably between 5.2 and 4.8;

- carrying out the methylolation reaction, maintaining the pH between 6.5 and 7.5, at a temperature between 70 and 120 °C, in a range of pressure from 0.05 bar to 2.5 bar, during between 5 and 100 minutes;

c) an urea condensation step, comprising:

- adding urea to the reactor, in an amount such that the molar ratio of formaldehyde/urea in the reactor is between 2.6 and 1.5, preferably between 2.3 and 1.9, adjusting the pH between 6.0 and 7.2;

- heating to 70-120°C, in a range of pressure from 0.05 bar to 2.5 bar, during between 30 and 300 minutes, to carry out the condensation reaction;

- plotting a condensation curve, measuring the viscosity of samples from the reaction mixture, at different time intervals during the condensation reaction, with a viscosimeter at 25°C, until the viscosity corresponding to the aimed molecular weight is reached;

- finalising the condensation by adding an alkali, to obtain a pH between 8.0 and 8.5;

d) a final urea addition step, comprising:

- adding further urea, at a temperature of 70 to 30 °C, during 15 to 120 minutes, maintaining a pH between 9.0 and 9.5, to reach a final molar ratio of formaldehyde/urea between 3.0 and 0.5, preferably between 2.6 and 0.9.

- cooling to a temperature lower than 30 °C.

In step a), the formaldehyde loaded into the reactor is selected from a formaldehyde solution, paraformaldehyde, and MFC (Melamine Formaldehyde Concentrate), or a combination of two or three of the foregoing. In case formaldehyde solution is used, either alone or in combination with any one of paraformaldehyde or MFC (Melamine Formaldehyde Concentrate), a solution with a concentration of 50 to 55 wt. % ($\pm$ 0.5 wt. %) formaldehyde in water is preferred. In case MFC is used in step a), as will be evident to one skilled in the art, not only formaldehyde is added in this methylolation step a), but also melamine, as the latter is contained in MFC.

In the following, particular embodiments, for different features of the above method, will be described, which in no manner should be understood to have a restrictive character on the general method. All of the particular embodiments referring to different features may be combined with one or more of the other particular embodiments. According to a first particular embodiment, the method further comprises:
c1) a melamine condensation, comprising:

- adding melamine to the reactor, adjusting the pH between 8.0-8.5;

- heating to 70-120°C, in a range of pressure from 0.05 bar to 2.5 bar, during between 30 and 300 minutes, to carry out the condensation reaction;

- plotting a condensation curve, measuring the viscosity of samples from the reaction mixture, at different time intervals during the condensation reaction, with a viscosimeter at 25°C, until the viscosity corresponding to the aimed molecular weight is reached;

- finalising the condensation by adding an alkali, to obtain a pH between 8.5 and 9.5;

wherein said melamine condensation is carried out simultaneously to urea condensation step c), or is carried out after urea condensation step c).

In the case the method of the invention comprises such a melamine condensation step c1), the quantity of melamine added must be accordingly adapted, by taking into account the melamine already present in the reactor, to reach the total amount of melamine necessary to prepare the aimed melamine-urea-formaldehyde resin.

In case the melamine condensation is carried out simultaneously to urea condensation step c), a co-condensation of urea and melamine during step c) will occur.

The pressures of the methylolation steps a) and b) may be both the same or be different, and are generally between 0.05 bar and 2.5 bar. According to particular embodiments, the pressures may, independently one of another, be between 0.9 and 1.5 bar.

The temperatures of the methylolation steps a) and b) and the condensation steps c) and d) may be all the same or be different, and are generally between 60 and 120 °C. According to particular embodiments, the temperatures may, independently one of another, be between 85 and 116 °C, or between 70 and 100 °C.

The above method may be carried out either as a batch process, or as a semi-continuous process. If carried out as a batch process, the steps of the method are carried out sequentially, in one and the same reactor. Said batch reactor may further be equipped with one or more of jacket and coils (for heating up and cooling down), external flux condenser, stirrer, and hoppers. If the method is carried out as a semi-continuous process, two or more reactors are placed sequentially; that is, in each individual reactor of the semi-continuous system, one or two of the steps may be carried out. Such a system is also known as continuous stirred tank reactors (CSTRs).

According to a further particular embodiment, the method may comprise a further urea condensation step c2), carried out after urea condensation step c), comprising:

- adding urea to the reactor, in an amount such that the molar ratio of formaldehyde/urea in the reactor is between 1.9 and 1.5, adjusting the pH between 6.0 and 7.2;

- heating to 70-120°C, in a range of pressure from 0.05 bar to 2.5 bar, during between 30 and 300 minutes, to carry out a second condensation reaction;

- plotting a condensation curve, measuring the viscosity of samples from the reaction mixture, measuring the viscosity of samples from the reaction mixture, at different time intervals during the condensation reaction, with a viscosimeter at 25°C, until the viscosity corresponding to the aimed molecular weight is reached;

- finalising the condensation by adding alkali to obtain a pH between 7.5 and 9.0.

Alternatively, the method comprises a further urea condensation step c2), which is carried out after melamine condensation c1), comprising:

- adding urea to the reactor, in an amount such that the molar ratio of formaldehyde/urea in the reactor is between 1.9 and 1.5, adjusting the pH between 6.0 and 7.2;

- heating to 70-120°C, in a range of pressure from 0.05 bar to 2.5 bar, during between 30 and 300 minutes, to carry out a second condensation reaction;

- plotting a condensation curve, measuring the viscosity of samples from the reaction mixture, measuring the viscosity of samples from the reaction mixture, at different time intervals during the condensation reaction, with a viscosimeter at 25°C, until the viscosity corresponding to the aimed molecular weight is reached;

- finalising the condensation by adding alkali to obtain a pH between 7.5 and 9.0.

As noted above, the melamine condensation c1) may be performed as a co-condensation of urea and melamine, if carried out simultaneously to step c), or may be carried out after step c).

Accordingly, the method according to the present invention comprises the following alternative embodiments regarding the condensation steps, which are carried out after step a) a melamine methylolation step and b) an urea methylolation step:

i) an urea condensation step c) only;

ii) an urea condensation step c) and a melamine condensation step c1);

iii) an urea condensation step c) and an urea condensation step c2);

iv) an urea condensation step c), a melamine condensation step c1) and an urea condensation step c2);

v) an urea condensation step c), an urea condensation step c2) and a melamine condensation step c1);

vi) an urea and melamine condensation step (i.e., steps c) and c1) are carried out simultaneously);

vii) an urea and melamine condensation step (i.e., steps c) and c1) are carried out simultaneously) and an urea condensation step c2).

In any of the above-defined methods, the acid may be organic and/or inorganic acids. The acid should have a pKa lower than 7; according to a particular embodiment, the pKa will be in the range 2-5. Particular examples of such organic acids are formic acid, lactic acid, glycolic acid, acetic acid, sulfamic acid. Examples of such inorganic acids are sulphuric acid, hydrochloric acid and phosphoric acid. Any other acids known to those skilled in the art, and complying with the above conditions, are understood to be usable to adjust the pH values in the method of the present invention, although not included in the above list.

In any of the above-defined methods, the alkali refers to a base that dissolves in water, which should have a pKa higher than 7; according to a particular embodiment, the pKa will be in the range 8-15. Hydroxides, amines, carbonates and ammonium are such alkalis. Particular examples thereof are sodium hydroxide, ammonia, monoethanolamine (MEA), diethanolamine (DEA), triethanolamine (TEA), and sodium carbonate. Any other alkalis known to those skilled in the art, and complying with the above conditions, are understood to be usable to adjust the pH values in the method of the present invention, although not included in the above list.

In any of the above-defined methods, in step a), the melamine methylolation, the molar ratio of formaldehyde/melamine is preferably between 8 and 10. The pH in said step a) is preferably between 7.5 and 8.5. The reaction temperature in step a) is preferably between 70 and 80 °C. The reaction time in step a) is preferably between 15 and 30 minutes.

In step b), the urea methylolation step, the molar ratio of formaldehyde/urea is preferably about 5. The pH in said step a) is preferably between 6.5 and 7.5 The reaction temperature in step a) is preferably between 75 and 85 °C. The reaction time in step a) is preferably between 15 and 30 minutes. Not all of these preferred conditions have to be necessarily simultaneously combined. For example, the reaction temperature may be in the preferred range, and the pH within the general range defined for the method of the invention. Any other combination is also possible, as long as the individual values are within the ranges defined for the invention.

In any of the above-defined methods, in step d), the final urea addition step, the urea addition may be performed at once, i.e. in one step, or may alternatively be performed in two or more substeps. According to a particular embodiment, the final molar ratio of formaldehyde/urea in step d) is between 3.0 and 0.5, preferably 2.9 and 0.9.

The obtained melamine-urea-formaldehyde resin may further be subjected to a distillation step, in order to reduce the water content therein and thus increase the reactive matter of the resin. According to a preferred embodiment, in the present method a formaldehyde solution having a concentration of 55 wt.% $\pm$ 0.5 wt.% is used; in such case, the method may be carried out without such a distillation step, as it is not needed in order to achieve a high reactive matter concentration in the final resin. The avoidance of such a distillation step allows to reduce the overall energy consumption and further increases the safety of the process.

## Melamine-urea-formaldehyde resins

According to a second object of the invention, a melamine-urea-formaldehyde resin, obtained by any of the above defined methods, is provided.

According to a particular embodiment, said urea-formaldehyde resin comprises:

18.0-32.0 wt. % formaldehyde;

1.0-32.0 wt. % melamine;

12.0-56.0 wt. % urea; and

0.00-1.00 wt. % buffer.

A further particular embodiment provides a melamine-urea-formaldehyde resin which complies with at least one of the following:

20.0-30.0 wt. % formaldehyde;

2.0-30.0 wt. % melamine;

14.-50.0 wt. % urea; and

0.05-0.4 wt. % buffer.

According to a further particular embodiment, any of the above defined melamine-urea-formaldehyde resins according to the invention shows the following features:

30.0-86.0 wt. % reactive matter;

40-75 wt. % solids content;

a formaldehyde/urea molar ratio between 5.00 and 0.80;

a formaldehyde/melamine molar ratio between 108 and 6;

a formaldehyde/$NH_2$ molar ratio between 1.50 and 0.25;

a pH between 8.6 and 9.8.

According to a further particular embodiment, said melamine-urea-formaldehyde resin complies with at least one of the following:

58-85 wt. % reactive matter;

53-66 wt. % solids content;

a formaldehyde/urea molar ratio between 2.10 and 0.90;

a formaldehyde/melamine molar ratio between 52 and 8;

a formaldehyde/$NH_2$ molar ratio between 1.05 and 0.45;

a pH between 9.0 and 9.5.

### Uses and materials

A further aspect of the invention is the use of any of the melamine-urea-formaldehyde resins defined above, in the manufacture of products selected from wood composite boards, such as wood derived boards and fibreboards, natural and/or synthetic, woven or non-woven fibre mats for compression molding and the resulting composites, particleboards, chip boards, oriented strand boards, plywood and paperboards, and fibreglass insulations and rock wool insulations. According to a particular embodiment, the material is selected from plywood, fibreboard and particleboard.

Another aspect of the invention are the products obtained by use of the melamine-urea-formaldehyde resins according to the present invention, wherein the products are selected from wood composite boards, such as wood derived boards, fibreboards, natural and/or synthetic, woven or non-woven fibre mats for compression molding and the resulting composites, particleboards, chip boards, oriented strand boards, plywood and paperboards, and fibreglass insulations and rock wool insulations. According to a particular embodiment, the product is selected from plywood, fibreboard and particleboard.

Plywood

The process for manufacturing plywood as a coated material may correspond to a process typically used in the art, with the exception that an adhesive solution, comprising an urea-formaldehyde resin according to the present invention, which is applied to wood veneers, by curtain coating, in amounts as described herein.

A plywood may be obtained from an uneven number of wood veneers, and the number of wood veneers, as well as the nature of the wood, will vary depending on the wishes for the final products. As a mode of example, the number of wood veneers may vary from 3 to 29, in particular from 5 to 25, and more in particular from 7 to 23, and the thickness of the wood veneers may be from 0.3 to 3 mm, in particular from 0.5 to 2.5 mm, more particularly from 1 to 2 mm.

A process for manufacturing plywood may generally comprise placing a first wood veneer in a conveyor belt, with the wood grain in a first direction, to allow the wood veneer to pass through a curtain of an adhesive solution; placing a subsequent wood veneer with the wood grain of the wood in the cross direction with respect to said first direction. Subsequent wood veneers are placed alternatively with the wood grain in the first direction and the wood grain in the cross direction. The wood veneers are then placed on top of each other to provide a stack of wood veneers, wherein adjacent wood veneers have the wood grain in cross directions and with the surface of the wood veneer which is free of adhesive solution being placed on top of the surface containing adhesive of a previous wood veneer, until the last wood veneer is to be placed, to obtain a stack of wood veneers of desired thickness. The last wood veneer to be placed on the stack is free of any adhesive.

The stack of wood veneers is typically pressed at a temperature from 80 to 160°C, in particular from 90 to 150°C and more particularly from 100 to 140°C, and at a pressure from 0.4 to 2.0 MPa for a length of time from 0.4 to 3 minutes per mm of total thickness of the curtain coated substrate being pressed.

The stack of wood veneers may be directly submitted to the above conditions, or may have been previously submitted to a previous compression step, wherein the stack of veneers is subjected to a pressure of from 0.3 to 1 MPa, for 2 to 30 minutes, at room temperature (e.g. at a temperature from 16 to 26 °C). Such previous compression step may advantageously prevent drying out of the resin and improve adhesion, particularly if compression cannot be performed immediately after stacking.

A plywood obtainable or obtained by processes as described herein advantageously displays good bonding quality. In particular, it has been found that methods as described herein can produce plywood with aminoplast resin-based adhesive, which have good bonding properties, with a low amount of adhesive being used.

In particular, a plywood may be obtained, wherein wood veneers are adhered by an adhesive solution as described herein, formulated with an urea formaldehyde resin according to the invention, organic and/or inorganic filler and water, as known in the state of the art, interposed between the wood veneers, and applied to one of the surfaces of the wood veneers to an amount from 130 to 250 g/m$^2$; said plywood achieves a class **I,** class II or class III bonding quality rating, according to *EN 314-1:2004 and to EN 314-2:* 1993 *(confirmed in 2013) European Standards* and has an E-1 formaldehyde emissions rating according to *EN 636:2012+A1:2015 European Standard or is Title VI compliant according to the Toxic Substances Control Act (TSCA) of the United States,* or has a three star rating or four star rating according to the *Japanese Industrial Standard JIS 1460:2015).*

Particleboard

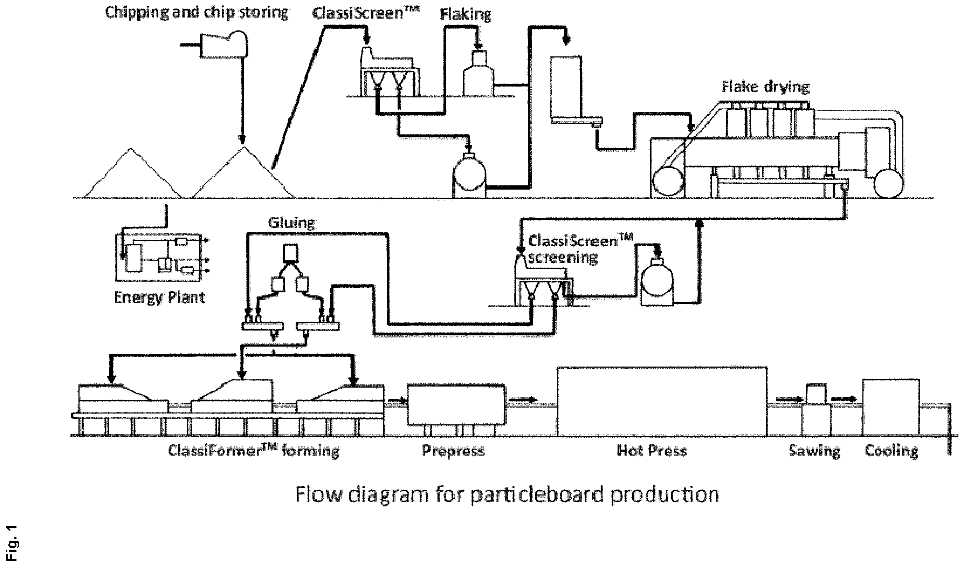

The production of particleboard may be performed according to processes known in the state or the art. A flow diagram corresponding to a typical production process is shown in Figure 1. Further details regarding the process may be found, for example, in *"Wood-Based Panels, An Introduction for Specialists"* (2010), Brunel University Press, Thoemen et al, Pages 5-47.

Medium Density Fibreboard (MDF)

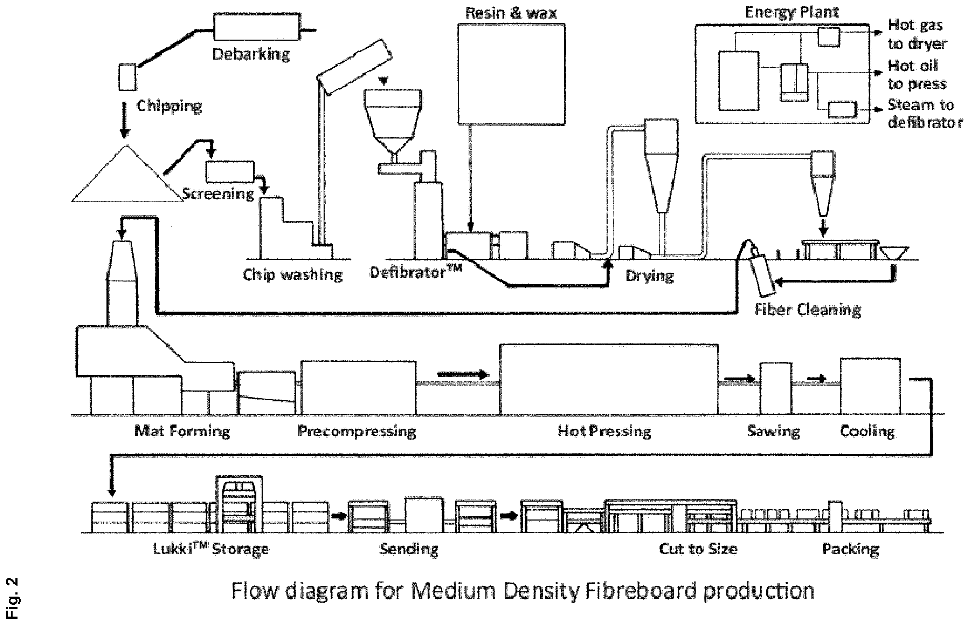

The production of MDF may be performed according to processes known in the state or the art. A flow diagram corresponding to a typical production process is shown in Figure 2. Further details regarding the process may be found, for example, in *"Wood-Based Panels, An Introduction for Specialists"* (2010), Brunel University Press, Thoemen et al, Pages 61-73).

Manufacture of fiberglass insulations and rock wool insulations

The manufacture of fiberglass and rock wool insulation products generally comprises a step of manufacture of the rock wool and fiberglass themselves, which can be performed by different procedures, for example according to the techniques known in the state of the art as rotary process (internal centrifuge), cascade process (external centrifuge), and flame attenuation process (pot & marble).

To ensure the assembly and adhesion of the fibers, an adhesive resin, generally a thermosetting resin, is projected onto the fibers (glass fiber or rock wool), or mixed with the fibers. The mixture of fibers and resin is subjected to a thermal treatment, at a temperature generally higher than 100 °C, in order to effect the polycondensation of the resin and thus obtain a thermal and/or acoustic insulation product. Commonly used adhesive compositions are resins derived from formaldehyde, similar to those used in the manufacture of wood derived boards or wood composite boards. During the manufacture further additives may be added to the mixture of fibers and adhesive, such as for example catalysts for crosslinking the resin or waterproofing emulsions (typically paraffin-based).

That is, the manufacture of fiberglass insulations and rock wool insulations has many similarities to the manufacture of wood derived boards or wood composite boards.

In the following, the invention will be further illustrated by examples and experimental results. They should in no way be construed as limiting the scope of the invention, but merely as an illustration of the invention.

## EXAMPLES

## PROCEDURES

In the following, various procedures used throughout the examples, or to determine the characteristics and features of the final resins, are described.

## Water tolerance

Hereinafter the method to determine the amount of water that 1 gram of resin admits, without becoming cloudy or precipitating, is described.

## Material

- 100 mL beaker

- Scale thermometer 0 to 100 °C, with precision $\pm$ 1°C

- Granatary balance (precision 0.1 g)

- Magnetic stirrer and magnetized rod

- 50 mL graduated burette

## Process

Approximately 10 grams of resin are weighed into a beaker, the temperature of which has been previously adjusted to 25 ° C (or alternatively, to a different temperature defined in the corresponding technical specifications to be followed). The magnetized rod is inserted and the magnetic stirrer is started. From a burette with distilled water at 25 ° C (or the alternative specified temperature), water is added drop by drop, until the sample becomes cloudy or a visible precipitation occurs. It is advisable to wait a few seconds, to ensure that the turbidity is persistent.

## Calculations

The tolerance to water, expressed in grams of water per grams of resin, is calculated according to the following equation:

$$\text{Water tolerance} \left( \frac{\text{g water}}{\text{g resin}} \right) = \frac{\text{mL of water added}}{\text{gr resin}}$$

## Intermediate Viscosity

During the preparation of MUF resins, particularly during the polymerization step, generally known as acid condensation, it is usual to determine the degree of condensation of the resin at different times, by determining the viscosity, in order to decide when the condensation should be finalized, in dependence of the desired characteristics in the final resin: the higher the molecular weight desired, the higher the viscosity aimed. The viscosity of samples is determined by use of a Hoeppler viscometer, and the measurements are used to plot a condensation curve, providing relevant information on the course of the condensation.

The viscosity of glues and resins is determined as a function of the time that a sphere requires to fall down inside a vertical cylindrical tube, which contains the sample to be tested.

Material

- Hoeppler Viscometer

- Scale thermometer 0 to 100°C, with precision $\pm$ 1°C

- Refrigerating bath

- Stopwatch

Process

The sample is adjusted to the indicated temperature, in this case 25°C, and the viscometer internal tube is filled with it.

The appropriate sphere is introduced (depending on the required viscosity range) and the time elapsed, while the sphere falls between two reference marks separated by a certain distance, is measured with a stopwatch.

Examples of spheres usually used are indicated in Table 1:

**Table 1**

| | SPHERE | | |
|---|---|---|---|
| | N° 1 | N° 2 | N° 3 |
| Range of measurement, cP | 2 - 200 | 10 – 1.000 | 50 – 5.000 |
| **Material** | Glass | Glass | Steel |
| **Diameter, mm** | 13.5 | 15.5 | 15.0 |
| **Mass, gr.** | 2.82 | 4.45 | 14.40 |
| **FACTOR** | **1.0** | **7.5** | **10.0** |

The result, expressed as viscosity in centipoise (cP) at the temperature at which the measurement was made, is obtained by multiplying the value of the reading on the stopwatch (in seconds) by the factor corresponding to the sphere used, as indicated in Table 1:

$$Viscosity\ (cP) = time\ (s)\ x\ sphere\ factor$$

**Final viscosity**

The final viscosity of a prepared resin is determined by use of a rotational viscometer, and is indicated in centipoise.

Material

- Type LV rotational viscometer, with a speed / spindle combination, that provides a percentage of scale between 20 and 80%

- Scale thermometer 0 to 100°C, with precision $\pm$ 0.1°C

- Thermostated baths to cool or heat

Process

The temperature of the resin prepared according to the present invention, is adjusted to the value indicated in the corresponding technical specifications (in the frame of the present invention the viscosity is measured at the most common temperature of 25°C, although the test can be performed at any other temperature) with an accuracy of $\pm$ 0.5 °C.

A speed / spindle combination is selected, so that the viscosity value of the sample of resin to be tested is in a scale percentage of between 20 and 80% (In Table 2 presented below, the full scale provided by different speed and spindle combinations are summarized).

The selected spindle is screwed to the head and immersed in the sample, so that it is completely centred in the container, and so that the level of the sample coincides with the immersion mark on the spindle.

The viscometer is started and the value indicated on the display is noted, once the reading has stabilized.

### Table 2

| | SPINDLE | | | |
|---|---|---|---|---|
| SPEED (R.P.M) | | N° 1 | N° 2 | N° 3 | N° 4 |
| 0,3 | 20.000 cP | 100.000 cP | 400.000 cP | 2.000.000 cP |
| 0,6 | 10.000 cP | 50.000 cP | 200.000 cP | 1.000.000 cP |
| 1,5 | 4.000 cP | 20.000 cP | 80.000 cP | 400.000 cP |
| 3,0 | 2.000 cP | 10.000 cP | 40.000 cP | 200.000 cP |
| 6,0 | 1.000 cP | 5.000 cP | 20.000 cP | 100.000 cP |
| 12 | 500 cP | 2.500 cP | 10.000 cP | 50.000 cP |
| 30 | 200 cP | 1.000 cP | 4.000 cP | 20.000 cP |
| 60 | 100 cP | 500 cP | 2.000 cP | 10.000 cP |

The result is expressed as viscosity in centipoise (cP) at the temperature at which the test was performed (in this particular case, 25°C).

## Density

The density (weight of a resin sample in a volume unit) of the obtained resins was determined.

Material:

- Densimeter of different scales: 0.900 - 1.000, 1.000 - 1.100, 1.100 - 1.200, 1.200 - 1.300 and 1.300 - 1.400 g/cm$^3$

- Thermometer with precision $\pm$ 0.1°C

- Cooling water bath or steam bath

- 250 mL test tube

Process:

The sample is adjusted to the temperature indicated in the corresponding technical specifications (the most common is to measure the density at 25°C, although the test can be carried out at any other temperature) with an accuracy of ± 0.5°C.

The sample is transferred to the test tube and the densimeter is immersed.

By reading on the densimeter of the division that makes up with the surface of the liquid, the value of the density is obtained, expressed in g / cm$^3$ and specifying the temperature at which the test was performed.

## Determination of pH

The pH of the resins, both final and during the preparation, is determined by use of a pH-meter.

Material:

- pH meter

- Electrode for pH measurement, with range from 0 to 14 units

- Thermometer with precision ± 1°C

- Cooling water bath or steam bath

Process

The sample of resin is adjusted to the temperature indicated in the corresponding technical specifications (the most common is to measure the pH at 25°C, although the test can be carried out at any other temperature) with an accuracy of ± 1°C. If the pH meter lacks a probe to measure the temperature, the value to which the sample has been adjusted is entered manually (the equipment that incorporates a temperature probe performs an automatic compensation of the pH value under the given conditions).

The electrode is immersed in the sample of resin and the pH measurement key is pressed.

Once the reading is stabilized, the pH value is taken and noted.

## Solids content

In the following, the method for determining the amount of solids contained in the final resin is described.

Material

- Analytical weighing scale (precision 0.1 mg)
- Aluminium plates 40-50 mm in diameter and 10-20 mm in height
- 5 mL graduated pipette
- Tweezers
- Air circulation stove with the capacity to maintain the temperature at 105 ± 1 °C
- Desiccator with silica gel

Procedure

Three plates are dried in the oven for a minimum of 15 minutes at 105 ± 1 °C, cooled in a desiccator and tared.

A resin sample is weighed on each one of the plates (sufficient quantity so that each sample contains around 0.45 grams of solid resin).

5 ml of distilled water are added to each sample of resin placed on the plates, and each one is gently shaken, until its content is well homogenized, preventing projections from occurring.

The dishes are placed on the stove and kept for three hours at 105 ± 1°C.

After this time, the dishes are allowed to cool in a desiccator, and are weighed.

The content of solids in the resin is calculated as follows:

$$Solids\ content\ (wt\%) = {A\ x\ 100}/{B}$$

wherein:

A: dry resin weight (gr)
B: Initial sample weight (gr)

## Gel Time

Herein the method to determine the time it takes for a resin to gel at 100 °C, with the addition of a catalyst, is described.

### Reactives

- Catalyst: Ammonium sulphate solution 25% ($SO_4 (NH_4)_2$)

### Material

- 100 mL beaker

- Glass stirring rod

- Triple beam weighing scale (precision 0.1 g)

- 2 mL graduated pipette

- 2 mL plastic syringe

- Assembly for determining gel time consisting of:

  • 1000 mL spherical flask with three ground-glass nozzles 29/32

  • Coolant with frosted 29/32

  • Heating blanket for 1000 mL spherical flasks

  • 29/32 rubber or Teflon grinding plugs with 16 mm diameter hole for test tube insertion

- Pyrex glass test tube with flange and dimensions: 16 mm external diameter, 160 mm length and 1.2 mm wall thickness.

- Fine stainless-steel wire with a curved end

- Stopwatch

### Process

100 grams of the resin to be tested are weighed in a beaker, and 2 mL of ammonium sulphate solution are added. It is stirred well with the glass rod, until a homogeneous mixture is obtained.

With the syringe, 1.5 mL of the previous mixture is taken and transferred to a test tube, taking care that there are no drops adhering to the walls. The stainless wire is placed inside the tube to stir. The test tube is inserted through the stopper of one of the flask's mouths up to the rim, so that the lower end of the tube is submerged in the boiling water that contains the flask, and the timer is started. The mixture inside the tube is gently agitated with the curved end of the fine wire.

The gel time, measured with a stopwatch and expressed in seconds, is the time elapsed from the instant the tube is introduced into the water bath until the resin hardens.

### Free formaldehyde

The content of free formaldehyde in the final resins was measured following the norm UNE EN 1243.

### Cloud Point (turbidity)

A sample of the resin is taken out of the reactor into a 250mL beaker. The beaker is put in a cold bath, and stirred to cool down. The temperature (°C) at which the resin changes from clear to milky is the Cloud Point.

### EXAMPLE 1: Comparative examples

**Example 1a:** First step alkaline condensation at a F/U molar ratio=5.00

463.7 g of formaldehyde 55 wt.% (temperature 60°C; pH 3.4) are loaded. The pH is adjusted with NaOH 25% (w/w) to a value within the range 7.0-7.5. 102.0 g of urea are added. An exotherm raises the temperature up to 99°C. It is cooled to 80°C and the pH is again adjusted to 7.0-7.5.

102.0 g of urea are added. The alkaline condensation is continued to a temperature of about 85°C, until the samples precipitate at a temperature of 45°C (cloud point). After 25 minutes, the alkaline condensation is finalised by adding formic acid 20% (w/w), to reduce the pH to a value within the range of 5.0-5.6. Then the resin in the reactor goes from transparent to opalescent. It is condensed at a temperature of 90° and pH 5.0, until a viscosity of 155 cP is reached. At that time, the pH is adjusted within a range of 8.0-8.5 and the reaction temperature is reduced to 95°C. 120 g of melamine are added. Heating is applied, to keep the temperature at 85°C, and the condensation is continued until a viscosity at 25°C of 400 cP is reached. Once this viscosity has been reached, NaOH 25% (w/w) is added to adjust the pH within a range of 9.0-9.5. It is cooled to 70°C, and 188.0 g of urea are added, reducing the temperature to 56°C. It is maintained for 15 minutes. The pH is adjusted within a range of 9.0-9.5. It is cooled to 25°C. The obtained resin is analysed after 24 hours; the results obtained are shown below in Table 3.

**Example 1b:** resin following the disclosure of US4536245A

A melamine urea formol resin is prepared, following the instructions provided in Example 2A of US4536245A.

The obtained resin is analysed after 24 hours; the results obtained are shown below in Table 3.

**Example 1c:** resin prepared following the disclosure of CN108795352A

A melamine urea formol resin is prepared following the disclosure of CN108795352A, particularly, a resin with a molar ratio formaldehyde:urea:melamine of 2.5:1:0.8 is prepared.

The obtained resin is analysed after 24 hours; the results obtained are shown below in Table 3.

**Table 3**

|                         | Example 1a | Example 1b | Example 1c |
|-------------------------|------------|------------|------------|
| Viscosity at 25°, cP    | 175        | 167        | 181        |
| Density at 25°C, g/cm3  | 1.292      | 1.289      | 1.290      |
| pH at 25°C              | 9.1        | 9.1        | 9.2        |
| Free formaldehyde, %    | 0.08       | 0.08       | 0.08       |
| Gel time, sec.          | 118        | 120        | 121        |
| Water tolerance         | 3.66       | 1.12       | 0.3        |
| Solids content, %       | 65.6       | 65.4       | 65.4       |
| Appearance              | Whitish    | Whitish    | Whitish    |

### EXAMPLE 2. Preparation of a resin according to the present invention

463.7 g of formaldehyde 55 wt.% (temperature 60°C; pH 3.4) are loaded. The pH is adjusted with NaOH 25% (w/w) to a value within the range 8.0-8.5. 60 g of melamine are added. It is heated to 90°C and maintained for 15 minutes.

102 g of urea are added and temperature maintained at 90°C for 30 minutes. 102 g of urea are added. It is heated to 90°C. It is condensed at a temperature of 90° and pH 6.5, until a viscosity at 25°C of 155 cP is reached. Then the pH is adjusted to a range of 8.0-8.5 and the temperature is reduced to 75°C. 60 g of melamine are added. Heating is applied to keep the temperature at 85°C, and the condensation is continued until a viscosity at 25°C of 400 cP is reached. Once this viscosity has been reached, NaOH 25% (w/w) is added to adjust the pH within a range of 9.0-9.5. It is cooled to 70°C, and 188 g of urea are added, reducing the temperature to 56°C. It is maintained for 15 minutes. The pH is adjusted within a range of 9.0-9.5. It is cooled to 25°C. The obtained resin is analysed after 24 hours; the results obtained are shown in Table 4:

**Table 4**

| | |
|---|---|
| Viscosity at 25°, cP | 140 |
| Density at 25°C, g/cm3 | 1.287 |
| pH at 25°C | 9.0 |
| Free formaldehyde, % | 0.08 |
| Gel time, sec. | 119 |
| Water tolerance | 1.59 |
| Solids content, % | 65.4 |
| Appearance | Clear |

### EXAMPLE 3. Preparation of a resin according to the present invention

463.7 g of formaldehyde 55 wt.% (temperature 60°C; pH 3.4) are loaded. The pH is adjusted with NaOH 25% (w/w) to a value within the range 8.0-8.5. 120 g of melamine are added. It is heated to 90°C and maintained for 15 minutes.

102 g of urea are added and temperature maintained at 80°C for 30 minutes. 94.1 g of urea are added. It is heated to 80°C. It is condensed at a temperature of 80° and pH 6.5, until a viscosity at 25°C of 200 cP is reached. Then the pH is adjusted to a range of 7.5-8.0 and the temperature is reduced to 75°C. 72.2 g of urea are added. Heating is applied to keep the temperature at 75°C, and the condensation is continued until a viscosity at 25°C of 300cP is reached. Once this viscosity has been reached, NaOH 25% (w/w) is added to adjust the pH within a range of 9.0-9.5. It is cooled to 70°C, and 123.8 g of urea are added, reducing the temperature to 56°C. It is maintained for 15 minutes. The pH is adjusted within a range of 9.0-9.5. It is cooled to 25°C. The obtained resin is analysed after 24 hours; the results obtained are shown in Table 5:

**Table 5**

| | |
|---|---|
| Viscosity at 25°, cP | 163 |
| Density at 25°C, g/cm3 | 1.287 |
| pH at 25°C | 9.1 |
| Free formaldehyde, % | 0.08 |
| Gel time, sec. | 109 |
| Water tolerance | 0.93 |
| Solids content, % | 65.5 |
| Appearance | Clear |

### EXAMPLE 4: Manufacture of particle boards

Particle boards were manufactured by use of the resins of above-indicated EXAMPLES 1a, 1b, 1c, 2 and 3.

A standard process for manufacturing particleboards was used, such as that shown in Figure 1. The particular conditions applied in such manufacture were the following:

Dry glue on dry wood: outer layer: 4.5%; inner layer: 3.5 %

Dry paraffin emulsion on dry wood: 0.60% outer layer and 0.40% inner layer

Press temperature: 200°C.

Press time: 145 seconds

The results are shown in Table 6:

**Table 6**

| PARAMETER | Example 1a (Comparative) | Example 1b (Comparative) | Example 1c (Comparative) | Example 2 (Invention) | Example 3 (Invention) |
|---|---|---|---|---|---|
| Thickness, mm | 15.65 | 15.6 | 15.6 | 15.60 | 15.5 |
| Density, Kg/m$^3$ | 660 | 659 | 658 | 661 | 654 |
| Internal Bond, N/mm2. UNE EN 312 | **6.2** | **6.1** | **6** | **6.6** | **6.9** |
| Water absorption, %. UNE EN 312 | 10.3 | 10.6 | 10.8 | 10.8 | 10.7 |
| Swelling in water, %. UNE EN 312 | 2.1 | 2.1 | 2.1 | 2.1 | 1.9 |
| Formaldehyde content (at 6.5% humidity) mg/100 g board. UNE EN 12460-5 | 8.3 | 8.3 | 8.5 | 8.2 | 8.1 |

## EXAMPLE 5: Determination of stability of comparative and inventive resins

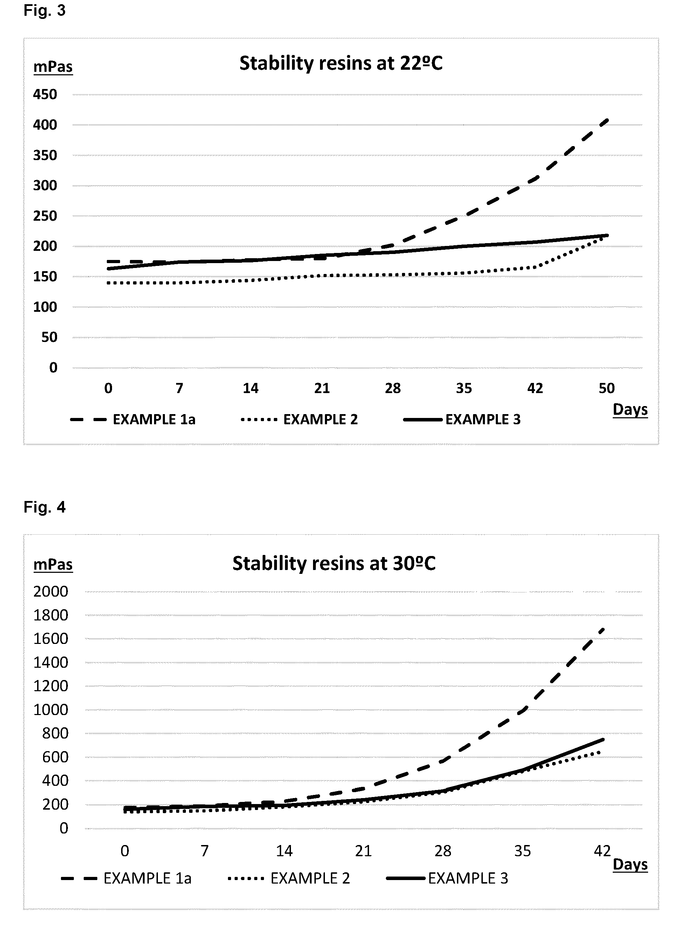

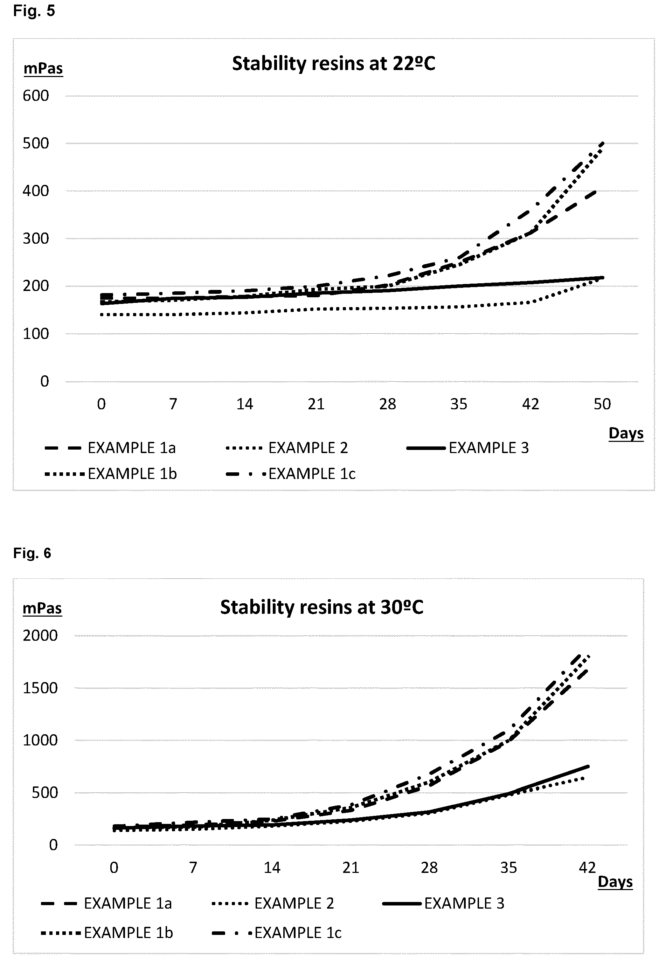

The stability of the resins of EXAMPLES 1a, 1b, 1c, 2 and 3, at two different storage temperatures: 22 and 30°C, was determined. The evolution of viscosity, measured at 25°C, and expressed in mPa.s was represented in corresponding Graphs. The stability of the resins of EXAMPLES 1a, 2 and 3 are represented in Figures 3 and 4; in Figures 5 and 6, additionally the resins of EXAMPLES 1b and 1c have been represented. As may be observed, the stability of the resins according to Examples 2 and 3, that is, according to the present invention, is clearly higher than the stability of the comparative resins 1a, 1b and 1c.

## EXAMPLE 6: Reactivity with catalysts (gel time) of comparative and inventive resins

The gel time, which is representative of the reactivity with catalysts, is determined by measuring the time it takes for a resin to gel at 100 °C, with the addition of a catalyst, according to the procedure described above.

The reactivity of the resins of EXAMPLES 1a, 2 and 3 with two different catalysts were determined. The results are shown in Table 7:

**Table 7**

| Gel time, seconds | EXAMPLE 1a | EXAMPLE 2 | EXAMPLE 3 |
|---|---|---|---|
| Ammonium nitrate, 25% | 127 | 127 | 118 |
| Ammonium sulphate, 25% | 118 | 119 | 109 |

## EXAMPLE 7: Manufacture of fibreboard with comparative and inventive resins:

Fibreboards were manufactured by use of the resins of EXAMPLES 1a, 1b, 1c, 2 and 3 above.

A standard process for manufacturing fibreboards was used, such as that shown in Figure 2. The particular conditions applied in such manufacture were the following:

Conditions of the boards:

Dry glue on dry wood: 7 %

Dry paraffin emulsion on dry wood: 1.50%

Dry catalyst on dry wood: 0.7%

Press temperature: 200°C.

Press time: 135 seconds

The results are shown in Table 8:

Table 8

| PARAMETER | Example 1a (Comparative) | Example 1b (Comparative) | Example 1c (Comparative) | Example 2 | Example 3 |
|---|---|---|---|---|---|
| Thickness, mm | 17.65 | 17.65 | 17.65 | 17.60 | 17.55 |
| Density, Kg/m$^3$ | 749 | 750 | 749 | 750 | 748 |
| Internal Bond, N/mm2. UNE EN 622 | 11.1 | 10.2 | 10.1 | 10.9 | 11.9 |
| Water absorption, %. UNE EN 622 | 24.0 | 25.7 | 27 | 20.5 | 30.0 |
| Swelling in water, %. UNE EN 622 | 6.4 | 6.4 | 6.4 | 6.1 | 7.0 |
| Formaldehyde content (at 6.5% humidity) mg/100 g board. UNE EN 12460-5 | 7.4 | 7.5 | 7.6 | 7.2 | 6.6 |

### EXAMPLE 8: Manufacture of plywood.

Plywood was manufactured by using the resins of Example 1a, Example 2 and Example 3.

The resin compositions were formulated as follows:

100 kg resin

20 kg wheat flour

3 kg ammonium nitrate

9.5 kg water.

Plywood of 12 mm thickness was produced, and the results according to standard EN-314 are shown in Table 9 below:

Table 9

| Resin | Press temperature | Press time | Resistance N/mm2 | Failure |
|---|---|---|---|---|
| Example 1a | 100°C | 7 minutes | 1.02 | 68% |
| Example 2 | 100°C | 7 minutes | 1.02 | 71% |
| Example 3 | 100°C | 7 minutes | 1.05 | 74% |

**Claims**

1. A method for the production of melamine-urea-formaldehyde resins, **characterized in that** it comprises:

   a) a melamine methylolation step, comprising:

   - loading formaldehyde, and, optionally, water, into a reactor equipped with stirring, cooling and heating; wherein formaldehyde is selected from formaldehyde, paraformaldehyde and MFC (Melamine Formaldehyde Concentrate), or a mixture of two or three of them;
   - adjusting the pH between 7.5 and 8.5 by adding an alkali;
   - adding melamine, in an amount such that the molar ratio of formaldehyde/melamine is between 108 and 6, preferably between 52 and 8;
   - carrying out the methylolation reaction, maintaining the pH between 7.0 and 8.5, at a temperature between 70 and 120 °C, in a range of pressure from 0.05 bar to 2.5 bar, during between 5 and 100 minutes;

   b) an urea methylolation step, comprising:

   - adjusting the pH between 6.5 and 7.5 by adding an alkali;
   - adding urea, in an amount such that the molar ratio of formaldehyde/urea is between 5.2 and 2.0, preferably between 5.2 and 4.8;
   - carrying out the methylolation reaction, maintaining the pH between 6.5 and 7.5, at a temperature between 70 and 120 °C, in a range of pressure from 0.05 bar to 2.5 bar, during between 5 and 100 minutes;

   c) an urea condensation step, comprising:

   - adding urea to the reactor, in an amount such that the molar ratio of formaldehyde/urea in the reactor is between 2.6 and 1.5, preferably between 2.3 and 1.9, adjusting the pH between 6.0 and 7.2;
   - heating to 70-120°C, in a range of pressure from 0.05 bar to 2.5 bar, during between 30 and 300 minutes, to carry out the condensation reaction;
   - plotting a condensation curve, measuring the viscosity of samples from the reaction mixture, at different time intervals during the condensation reaction, with a viscosimeter at 25°C, until the viscosity corresponding to the aimed molecular weight is reached;
   - finalising the condensation by adding an alkali, to obtain a pH between 8.0 and 8.5;

   d) a final urea addition step, comprising:

   - adding further urea, at a temperature of 70 to 30 °C, during 15 to 120 minutes, maintaining a pH between 9.0 and 9.5, to reach a final molar ratio of formaldehyde/urea between 3.0 and 0.5;
   - cooling to a temperature lower than 30 °C.

2. The method according to claim 1, **characterized in that** it further comprises:
   c1) a melamine condensation, comprising:

   - adding melamine to the reactor, adjusting the pH between 8.0-8.5;
   - heating to 70-120°C, in a range of pressure from 0.05 bar to 2.5 bar, during between 30 and 300 minutes, to carry out the condensation reaction;
   - plotting a condensation curve, measuring the viscosity of samples from the reaction mixture, at different time intervals during the condensation reaction, with a viscosimeter at 25°C, until the viscosity corresponding to the aimed molecular weight is reached;
   - finalising the condensation by adding an alkali, to obtain a pH between 8.5 and 9.5;

   wherein said melamine condensation is carried out simultaneously to urea condensation step c), or is carried out after urea condensation step c).

3. The method according to any one of claims 1 and 2, characterized that in step a), a buffer is added before or during the adjustment of the pH by adding an alkali.

4. The method according to any one of claims 1 to 3, **characterized in that** the formaldehyde added into the reactor in step a) is selected from a formaldehyde solution, paraformaldehyde, and MFC (Melamine Formaldehyde Concentrate), or a combination of two or three of the foregoing.

5. The method according to any one of claims 1 to 4, **characterized in that** the pressures of the methylolation steps a) and b) may be both the same or be different, and are between 0.05 bar and 2.5 bar.

6. The method according to any one of claims 1 to 5, **characterized in that** the temperatures of the methylolation steps a) and b) and the condensation steps c) and d) may be all the same or be different, and are between 60 and 120 °C.

7. The method according to any one of claims 1 to 6, **characterized in that** it comprises a further urea condensation step c2), carried out after urea condensation step c), comprising:

- adding urea to the reactor, in an amount such that the molar ratio of formaldehyde/urea in the reactor is between 1.9 and 1.5, adjusting the pH between 6.0 and 7.2;
- heating to 70-120°C, in a range of pressure from 0.05 bar to 2.5 bar, during between 30 and 300 minutes, to carry out a second condensation reaction;
- plotting a condensation curve, measuring the viscosity of samples from the reaction mixture, measuring the viscosity of samples from the reaction mixture, at different time intervals during the condensation reaction, with a viscosimeter at 25°C, until the viscosity corresponding to the aimed molecular weight is reached;
- finalising the condensation by adding alkali to obtain a pH between 7.5 and 9.0.

8. The method according to any one of claims 2 to 6, **characterized in that** it comprises a further urea condensation step c2), carried out after melamine condensation c1), comprising:

- adding urea to the reactor, in an amount such that the molar ratio of formaldehyde/urea in the reactor is between 1.9 and 1.5, adjusting the pH between 6.0 and 7.2;
- heating to 70-120°C, in a range of pressure from 0.05 bar to 2.5 bar, during between 30 and 300 minutes, to carry out a second condensation reaction;
- plotting a condensation curve, measuring the viscosity of samples from the reaction mixture, measuring the viscosity of samples from the reaction mixture, at different time intervals during the condensation reaction, with a viscosimeter at 25°C, until the viscosity corresponding to the aimed molecular weight is reached;
- finalising the condensation by adding alkali to obtain a pH between 7.5 and 9.0.

9. A melamine-urea-formaldeyde resin obtained according to the method of any one of claims 1 to 8, **characterized in that** it comprises:

18.0-32.0 wt. % formaldehyde;
1.0-32.0 wt. % melamine;
12.0-56.0 wt. % urea; and
0.00-1.00 wt. % buffer.

10. Use of a melamine-urea-formaldehyde resin, as obtained by the method of any one of claims 1 to 8, or as defined in claim 9, as an adhesive in the manufacture of products selected from wood composite boards, such as wood derived boards and fibreboards, natural and/or synthetic, woven or non-woven fibre mats for compression molding and the resulting composites, particleboards, chip boards, oriented strand boards, plywood and paperboards, and fibreglass insulations and rock wool insulations.

11. A product obtained by the use of claim 10, wherein the product is selected from wood composite boards, such as wood derived boards and fibreboards, natural and/or synthetic, woven or non-woven fibre mats for compression molding and the resulting composites, particleboards, chip boards, oriented strand boards, plywood and paperboards, and fibreglass insulations and rock wool insulations.

12. A product according to claim 11, wherein the product is selected from plywood, fibreboard and particleboard.

**Patentansprüche**

1. Ein Verfahren zur Herstellung von Melamin-Harnstoff-Formaldehyd-Harzen, **dadurch gekennzeichnet, dass** es umfasst:

a) einen Melamin-Methylolierungsschritt, umfassend:

- Einbringen von Formaldehyd und gegebenenfalls Wasser in einen zum Rühren, Kühlen und Heizen ausgestatteten Reaktor, wobei Formaldehyd ausgewählt ist aus Formaldehyd, Paraformaldehyd und MFC (Melamin-Formaldehyd-Konzentrat) oder einem Gemisch von zwei oder drei davon;
- Einstellen des pH-Werts zwischen 7,5 und 8,5 durch Zugabe eines Alkalis;
- Zugabe von Melamin in einer derartigen Menge, dass das Molverhältnis von Formaldehyd/Melamin zwischen 108 und 6, vorzugsweise zwischen 52 und 8 liegt;
- Durchführen der Methylolierungsreaktion, Halten des pH-Werts zwischen 7,0 und 8,5, bei einer Temperatur zwischen 70 und 120°C, in einem Druckbereich von 0,05 bar bis 2,5 bar, für zwischen 5 und 100 Minuten;

b) einen Harnstoff-Methylolierungsschritt, umfassend:

- Einstellen des pH-Werts zwischen 6,5 und 7,5 durch Zugabe eines Alkalis;
- Zugabe von Harnstoff in einer derartigen Menge, dass das Molverhältnis von Formaldehyd/Harnstoff zwischen 5,2 und 2,0, vorzugsweise zwischen 5,2 und 4,8 liegt;
- Durchführen der Methylolierungsreaktion, Halten des pH-Werts zwischen 6,5 und 7,5, bei einer Temperatur zwischen 70 und 120°C, in einem Druckbereich von 0,05 bar bis 2,5 bar, für zwischen 5 und 100 Minuten;

c) einen Harnstoffkondensationsschritt, umfassend:

- Zugabe von Harnstoff zu dem Reaktor in einer derartigen Menge, dass das Molverhältnis von Formaldehyd/Harnstoff in dem Reaktor zwischen 2,6 und 1,5, vorzugsweise zwischen 2,3 und 1,9 liegt, Einstellen des pH-Werts zwischen 6,0 und 7,2;
- Erwärmen auf 70-120°C, in einem Druckbereich von 0,05 bar bis 2,5 bar, für zwischen 30 und 300 Minuten, um die Kondensationsreaktion durchzuführen;
- Aufzeichnen einer Kondensationskurve, Messen der Viskosität von Proben aus dem Reaktionsgemisch in verschiedenen Zeitintervallen während der Kondensationsreaktion, mit einem Viskosimeter bei 25°C, bis die Viskosität, die dem angestrebten Molekulargewicht entspricht, erreicht ist;
- Beenden der Kondensation durch Zugabe eines Alkalis, um einen pH-Wert zwischen 8,0 und 8,5 zu erhalten;

d) einen letzten Harnstoffzugabeschritt, umfassend:

- Zugabe von weiterem Harnstoff, bei einer Temperatur von 70 bis 30°C, für 15 bis 120 Minuten, Halten eines pH-Werts zwischen 9,0 und 9,5, um ein endgültiges Molverhältnis von Formaldehyd/Harnstoff zwischen 3,0 und 0,5 zu erreichen;
- Abkühlen auf eine Temperatur unter 30°C.

2. Das Verfahren nach Anspruch 1, **dadurch gekennzeichnet, dass** es ferner umfasst:
   c1) eine Melaminkondensation, umfassend:

- Zugabe von Melamin zu dem Reaktor, Einstellen des pH-Werts zwischen 8,0 und 8,5;
- Erwärmen auf 70-120°C, in einem Druckbereich von 0,05 bar bis 2,5 bar, für zwischen 30 und 300 Minuten, um die Kondensationsreaktion durchzuführen;
- Aufzeichnen einer Kondensationskurve, Messen der Viskosität von Proben aus dem Reaktionsgemisch in verschiedenen Zeitintervallen während der Kondensationsreaktion, mit einem Viskosimeter bei 25°C, bis die Viskosität, die dem angestrebten Molekulargewicht entspricht, erreicht ist;
- Beenden der Kondensation durch Zugabe eines Alkalis, um einen pH-Wert zwischen 8,5 und 9,5 zu erhalten;

wobei die Melaminkondensation gleichzeitig mit dem Harnstoffkondensationsschritt c) durchgeführt wird oder nach dem Harnstoffkondensationsschritt c) durchgeführt wird.

3. Das Verfahren nach einem der Ansprüche 1 und 2, **dadurch gekennzeichnet, dass** in Schritt a) vor oder während des Einstellens des pH-Werts durch Zugabe eines Alkalis ein Puffer zugegeben wird.

4.  Das Verfahren nach einem der Ansprüche 1 bis 3, **dadurch gekennzeichnet, dass** das in Schritt a) dem Reaktor zugegebene Formaldehyd aus einer Formaldehydlösung, Paraformaldehyd und MFC (Melamin-Formaldehyd-Konzentrat) oder einer Kombination von zwei oder drei der vorstehenden ausgewählt ist.

5.  Das Verfahren nach einem der Ansprüche 1 bis 4, **dadurch gekennzeichnet, dass** die Drücke der Methylolierungsschritte a) und b) beide gleich oder verschieden sein können und zwischen 0,05 bar und 2,5 bar liegen.

6.  Das Verfahren nach einem der Ansprüche 1 bis 5, **dadurch gekennzeichnet, dass** die Temperaturen der Methylolierungsschritte a) und b) und der Kondensationsschritte c) und d) alle gleich oder verschieden sein können und zwischen 60 und 120°C liegen.

7.  Das Verfahren nach einem der Ansprüche 1 bis 6, **dadurch gekennzeichnet, dass** es einen weiteren Harnstoff-Kondensationsschritt c2) umfasst, der nach dem Harnstoff-Kondensationsschritt c) durchgeführt wird, umfassend:

    - Zugabe von Harnstoff zu dem Reaktor in einer derartigen Menge, dass das Molverhältnis von Formaldehyd/Harnstoff in dem Reaktor zwischen 1,9 und 1,5 liegt, Einstellen des pH-Werts zwischen 6,0 und 7,2;
    - Erwärmen auf 70-120°C, in einem Druckbereich von 0,05 bar bis 2,5 bar, für zwischen 30 und 300 Minuten, um eine zweite Kondensationsreaktion durchzuführen;
    - Aufzeichnen einer Kondensationskurve, Messen der Viskosität von Proben aus dem Reaktionsgemisch, Messen der Viskosität von Proben aus dem Reaktionsgemisch in verschiedenen Zeitintervallen während der Kondensationsreaktion, mit einem Viskosimeter bei 25°C, bis die Viskosität, die dem angestrebten Molekulargewicht entspricht, erreicht ist;
    - Beenden der Kondensation durch Zugabe von Alkali, um einen pH-Wert zwischen 7,5 und 9,0 zu erhalten.

8.  Das Verfahren nach einem der Ansprüche 2 bis 6, **dadurch gekennzeichnet, dass** es einen weiteren Harnstoff-Kondensationsschritt c2) umfasst, der nach der MelaminKondensation c1) durchgeführt wird, umfassend:

    - Zugabe von Harnstoff zu dem Reaktor in einer derartigen Menge, dass das Molverhältnis von Formaldehyd/Harnstoff in dem Reaktor zwischen 1,9 und 1,5 liegt, Einstellen des pH-Werts zwischen 6,0 und 7,2;
    - Erwärmen auf 70-120°C, in einem Druckbereich von 0,05 bar bis 2,5 bar, für zwischen 30 und 300 Minuten, um eine zweite Kondensationsreaktion durchzuführen;
    - Aufzeichnen einer Kondensationskurve, Messen der Viskosität von Proben aus dem Reaktionsgemisch, Messen der Viskosität von Proben aus dem Reaktionsgemisch in verschiedenen Zeitintervallen während der Kondensationsreaktion mit einem Viskosimeter bei 25°C, bis die Viskosität, die dem angestrebten Molekulargewicht entspricht, erreicht ist;
    - Beenden der Kondensation durch Zugabe eines Alkalis, um einen pH zwischen 7,5 und 9,0 zu erhalten.

9.  Ein Melamin-Harnstoff-Formaldehyd-Harz, erhalten nach dem Verfahren nach einem der Ansprüche 1 bis 8, **dadurch gekennzeichnet, dass** es umfasst: 18,0-32,0 Gew.-% Formaldehyd;

    1,0-32,0 Gew.-% Melamin;
    12,0-56,0 Gew.-% Harnstoff; und
    0,00-1,00 Gew.-% Puffer.

10. Verwendung eines Melamin-Harnstoff-Formaldehyd-Harzes, erhalten durch das Verfahren nach einem der Ansprüche 1 bis 8 oder wie in Anspruch 9 definiert, als Klebstoff bei der Herstellung von Produkten ausgewählt aus Holz-Verbundplatten, wie z.B. Holzwerkstoffplatten und Faserplatten, natürlichen und/oder synthetischen, Fasergewebe- oder Faservliesmatten für das Formpressen und die resultierenden Verbundwerkstoffe, Spanplatten, Holzspanplatten, OSB-Platten, Sperrholz und Pappe, sowie Glasfaserisolierungen und Steinwolleisolierungen.

11. Ein Produkt, erhalten durch die Verwendung nach Anspruch 10, wobei das Produkt ausgewählt ist aus Holz-Verbundplatten, wie z.B. Holzwerkstoffplatten und Faserplatten, natürlichen und/oder synthetischen, Fasergewebe- oder Faservliesmatten für das Formpressen und die resultierenden Verbundwerkstoffe, Spanplatten, Holzspanplatten, OSB-Platten, Sperrholz und Pappe, sowie Glasfaserisolierungen und Steinwolleisolierungen.

12. Ein Produkt nach Anspruch 11, wobei das Produkt ausgewählt ist aus Sperrholz, Faserplatten und Spanplatten.

**Revendications**

1. Procédé de production de résines mélamine-urée-formaldéhyde, **caractérisé en ce qu'**il comprend :

   a) une étape de méthylolation de mélamine, comprenant :

   - le chargement de formaldéhyde, et optionnellement d'eau, dans un réacteur muni d'une agitation, d'un refroidissement et d'un chauffage ; dans lequel le formaldéhyde est choisi parmi le formaldéhyde, le paraformaldéhyde et le MFC (concentré de mélamine-formaldéhyde), ou un mélange de deux ou trois de ceux-ci ;
   - l'ajustement du pH entre 7,5 et 8,5 par ajout d'un alcali ;
   - l'ajout de mélamine, en une quantité telle que le rapport molaire formaldéhyde/mélamine soit compris entre 108 et 6, de préférence entre 52 et 8 ;
   - la réalisation de la réaction de méthylolation, en maintenant le pH entre 7,0 et 8,5, à une température comprise entre 70 et 120°C, dans une plage de pression comprise entre 0,05 bar et 2,5 bar, pendant 5 à 100 minutes ;

   b) une étape de méthylolation d'urée, comprenant :

   - l'ajustement du pH entre 6,5 et 7,5 par ajout d'un alcali ;
   - l'ajout d'urée, en quantité telle que le rapport molaire formaldéhyde/urée soit compris entre 5,2 et 2,0, de préférence entre 5,2 et 4,8 ;
   - la réalisation de la réaction de méthylolation, en maintenant le pH entre 6,5 et 7,5, à une température comprise entre 70 et 120°C, dans une plage de pression comprise entre 0,05 bar et 2,5 bar, pendant 5 à 100 minutes ;

   c) une étape de condensation d'urée, comprenant :

   - l'ajout d'urée au réacteur, en quantité telle que le rapport molaire formaldéhyde/urée dans le réacteur soit compris entre 2,6 et 1,5, de préférence entre 2,3 et 1,9, et l'ajustement du pH entre 6,0 et 7,2 ;
   - le chauffage jusqu'à 70-120°C, dans une plage de pression comprise entre 0,05 bar et 2,5 bar, pendant 30 à 300 minutes, pour réaliser la réaction de condensation ;
   - le tracé d'une courbe de condensation, la mesure de la viscosité d'échantillons du mélange réactionnel, à différents intervalles de temps pendant la réaction de condensation, à l'aide d'un viscosimètre à 25°C, jusqu'à atteindre la viscosité correspondant au poids moléculaire visé ;
   - la finalisation de la condensation par ajout d'un alcali, pour obtenir un pH compris entre 8,0 et 8,5 ;

   d) une étape finale d'ajout d'urée, comprenant :

   - l'ajout d'urée supplémentaire, à une température de 70 à 30°C, pendant 15 à 120 minutes, en maintenant un pH compris entre 9,0 et 9,5, pour atteindre un rapport molaire final formaldéhyde/urée compris entre 3,0 et 0,5 ;
   - le refroidissement jusqu'à une température inférieure à 30°C.

2. Procédé selon la revendication 1, **caractérisé en ce qu'**il comprend en outre :
   c1) une condensation de mélamine, comprenant :

   - l'ajout de mélamine au réacteur, l'ajustement du pH entre 8,0 et 8,5 ;
   - le chauffage jusqu'à 70-120°C, dans une plage de pression comprise entre 0,05 bar et 2,5 bar, pendant 30 à 300 minutes, pour réaliser la réaction de condensation ;
   - le tracé d'une courbe de condensation, la mesure de la viscosité d'échantillons du mélange réactionnel, à différents intervalles de temps pendant la réaction de condensation, à l'aide d'un viscosimètre à 25°C, jusqu'à atteindre la viscosité correspondant au poids moléculaire visé ;
   - la finalisation de la condensation par ajout d'un alcali, pour obtenir un pH compris entre 8,5 et 9,5 ;

   dans lequel ladite condensation de mélamine est réalisée simultanément à l'étape de condensation d'urée c) ou est réalisée après l'étape de condensation d'urée c).

**3.** Procédé selon l'une quelconque des revendications 1 et 2, **caractérisé en ce qu'**à l'étape a), un tampon est ajouté avant ou pendant l'ajustement du pH par ajout d'un alcali.

**4.** Procédé selon l'une quelconque des revendications 1 à 3, **caractérisé en ce que** le formaldéhyde ajouté dans le réacteur à l'étape a) est choisi parmi une solution de formaldéhyde, le paraformaldéhyde et le MFC (concentré de mélamine-formaldéhyde), ou une combinaison de deux ou trois de ce qui précède.

**5.** Procédé selon l'une quelconque des revendications 1 à 4, **caractérisé en ce que** les pressions des étapes de méthylolation a) et b) peuvent être identiques ou différentes, et sont comprises entre 0,05 bar et 2,5 bar.

**6.** Procédé selon l'une quelconque des revendications 1 à 5, **caractérisé en ce que** les températures des étapes de méthylolation a) et b) et des étapes de condensation c) et d) peuvent être identiques ou différentes, et sont comprises entre 60 et 120°C.

**7.** Procédé selon l'une quelconque des revendications 1 à 6, **caractérisé en ce qu'**il comprend une étape supplémentaire de condensation d'urée c2), réalisée après l'étape de condensation d'urée c), comprenant :

- l'ajout d'urée au réacteur, en une quantité telle que le rapport molaire formaldéhyde/urée dans le réacteur soit compris entre 1,9 et 1,5, l'ajustement du pH entre 6,0 et 7,2 ;
- le chauffage jusqu'à 70-120°C, dans une plage de pression comprise entre 0,05 bar et 2,5 bar, pendant 30 à 300 minutes, pour réaliser une seconde réaction de condensation ;
- le tracé d'une courbe de condensation, la mesure de la viscosité d'échantillons du mélange réactionnel, la mesure de la viscosité d'échantillons du mélange réactionnel, à différents intervalles de temps pendant la réaction de condensation, avec un viscosimètre à 25°C, jusqu'à atteindre la viscosité correspondant au poids moléculaire visé ;
- la finalisation de la condensation par ajout d'un alcali pour obtenir un pH compris entre 7,5 et 9,0.

**8.** Procédé selon l'une quelconque des revendications 2 à 6, **caractérisé en ce qu'**il comprend une étape supplémentaire de condensation d'urée c2), réalisée après la condensation de mélamine c1), comprenant :

- l'ajout d'urée au réacteur, en une quantité telle que le rapport molaire formaldéhyde/urée dans le réacteur soit compris entre 1,9 et 1,5, l'ajustement du pH entre 6,0 et 7,2 ;
- le chauffage jusqu'à 70-120°C, dans une plage de pression comprise entre 0,05 et 2,5 bar, pendant 30 à 300 minutes, pour réaliser une seconde réaction de condensation ;
- le tracé d'une courbe de condensation, la mesure de la viscosité d'échantillons du mélange réactionnel, la mesure de la viscosité d'échantillons du mélange réactionnel, à différents intervalles de temps pendant la réaction de condensation, à l'aide d'un viscosimètre à 25°C, jusqu'à atteindre la viscosité correspondant au poids moléculaire visé ;
- la finalisation de la condensation par ajout d'un alcali pour obtenir un pH compris entre 7,5 et 9,0.

**9.** Résine mélamine-urée-formaldéhyde obtenue selon le procédé de l'une quelconque des revendications 1 à 8, **caractérisée en ce qu'**elle comprend :

18,0 à 32,0% en poids de formaldéhyde ;
1,0 à 32,0% en poids de mélamine ;
12,0 à 56,0% en poids d'urée ; et
0,00 à 1,00% en poids de tampon.

**10.** Utilisation d'une résine mélamine-urée-formaldéhyde, telle que obtenue par le procédé de l'une quelconque des revendications 1 à 8, ou telle que définie dans la revendication 9, comme adhésif dans la fabrication de produits choisis parmi les panneaux composites en bois, tels que les panneaux et panneaux de fibres dérivés du bois, les mats de fibres naturelles et/ou synthétiques, tissées ou non tissées pour le moulage par compression et les composites résultants, les panneaux de particules, les panneaux d'agglomérés, les panneaux à copeaux orientés, le contreplaqué et le carton, et les isolants en fibre de verre et les isolants en laine de roche.

**11.** Produit obtenu par l'utilisation de la revendication 10, dans lequel le produit est choisi parmi les panneaux composites en bois, tels que les panneaux et panneaux de fibres dérivés du bois, les mats de fibres naturelles et/ou synthétiques, tissées ou non tissées pour le moulage par compression et les composites résultants, les panneaux de particules, les panneaux d'agglomérés, les panneaux à copeaux orientés, le contreplaqué et le carton, et les isolants en fibre de verre et les isolants en laine de roche.

12. Produit selon la revendication 11, dans lequel le produit est choisi parmi le contreplaqué, le panneau de fibres et le panneau de particules.

**Fig. 1**

Flow diagram for particleboard production

Debarking

Chipping

Screening

Chip washing

Defibrator™

Resin & wax

Drying

Energy Plant

Hot gas to dryer

Hot oil to press

Steam to defibrator

Fiber Cleaning

Mat Forming

Precompressing

Hot Pressing

Sawing

Cooling

Lukki™ Storage

Sending

Cut to Size

Packing

Flow diagram for Medium Density Fibreboard production

Fig. 2

Fig. 3

Fig. 4

**Fig. 5**

Stability resins at 22ºC

Legend: EXAMPLE 1a, EXAMPLE 2, EXAMPLE 3, EXAMPLE 1b, EXAMPLE 1c

**Fig. 6**

Stability resins at 30ºC

Legend: EXAMPLE 1a, EXAMPLE 2, EXAMPLE 3, EXAMPLE 1b, EXAMPLE 1c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 571039 A
- US 5008365 A
- EP 2402379 A1
- US 20140275353 A1
- US 20030004298 A1
- WO 2013144226 A1
- US 5681917 A
- US 4536245 A
- CN 108795352 A

**Non-patent literature cited in the description**

- **SANDLER et al.** Polymer synthesis. Academic Press Inc, 1994, vol. II
- **BONO et al.** Melamine-Urea-Formaldehyde (MUF) Resin: The Effect of the Number of Reaction Stages and Mole Ratio on Resin Properties. *Jurnal Teknologi*, June 2003, 43-52
- **THOEMEN et al.** Wood-Based Panels, An Introduction for Specialists. Brunel University Press, 2010, 5-47
- **THOEMEN et al.** Wood-Based Panels, An Introduction for Specialists''. Brunel University Press, 2010, 61-73
- **2010** ; **THOEMEN et al.** Wood-Based Panels, An Introduction for Specialists. Brunel University Press, 5-47
- **2010** ; **THOEMEN et al.** Wood-Based Panels, An Introduction for Specialists''. Brunel University Press, 61-73